(19) Europäisches Patentamt / European Patent Office / Office européen des brevets

(11) **EP 3 789 636 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **20193575.6**

(22) Anmeldetag: **31.08.2020**

(51) Internationale Patentklassifikation (IPC):
*F16H 55/08* (2006.01)     *F16H 1/04* (2006.01)

(52) Gemeinsame Patentklassifikation (CPC):
**F16H 55/0806; F16H 1/04**

(54) **ZAHNRADGETRIEBE**

GEAR TRANSMISSION

ENGRENAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2019 DE 102019124027**

(43) Veröffentlichungstag der Anmeldung:
**10.03.2021 Patentblatt 2021/10**

(73) Patentinhaber: **MAUL KONSTRUKTIONEN GMBH 52146 Würselen (DE)**

(72) Erfinder: **Maul, Hans-Erich verstorben (DE)**

(74) Vertreter: **Kohlmann, Kai Donatusstrasse 1 52078 Aachen (DE)**

(56) Entgegenhaltungen:
**WO-A1-2019/086068     DE-B- 1 200 628 DE-U1-202011 106 149**

• **ROTH K: "EVOLVENTENVERZAHNUNGEN MIT EXTREMEN EIGENSCHAFTEN", ANTRIEBSTECHNIK, VEREINIGTE FACHVERLAGE, MAINZ, DE, Bd. 35, Nr. 7, 1. Juli 1996 (1996-07-01), Seiten 43-48, XP000598602, ISSN: 0722-8546**

EP 3 789 636 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Zahnradgetriebe mit einer Übersetzung ins Langsame umfassend ein Antriebsrad mit einer Außenverzahnung mit der Zähnezahl Z = 1, das mit einem Gegenrad kämmt.

## Hintergrund

In der Aktorik, z.B. der Gebäudetechnik, der Medizintechnik und dem Automobilbau, werden oft Zahnradgetriebe verwendet, die eine möglichst hohe Übersetzung ins Langsame und damit ein großes Drehmoment erzeugen, aber gleichzeitig von der Abtriebsseite leicht rückdrehbar sein müssen. Die Rückdrehbarkeit ist beispielsweise erforderlich, um elektrisch betätigte Klappen an einem Automobil oder Fenster an einem Gebäude bei einem Stromausfall notfalls von Hand betätigen zu können.

## Stand der Technik

Die DE 20 2011 106 149 U1 offenbart ein Zahnradgetriebe mit einer Übersetzung in das Langsame umfassend ein Antriebsrad mit einer Außenverzahnung mit der Zähnezahl Z=1, ein mit dem Antriebsrad kämmendes Gegenrad mit einer Zähnezahl Z >1. Bei dem Zahnradgetriebe handelt es sich um einen Spindelantrieb zur motorischen Verstellung eines Verstellelementes eines Kraftfahrzeugs, beispielsweise als Heckklappenantrieb. In einer Ausgestaltung des Zahnradgetriebes ist dieses nichtselbsthemmend ausgestaltet, um die manuelle Verstellbarkeit der Heckklappe zu ermöglichen. Hinsichtlich der Verzahnungsgeometrie wird auf den Stand der Technik zu Evoloid-Verzahnungen verwiesen, nämlich "Zahnradtechnik, Evolventen-Sonderverzahnungen zur Getriebeverbesserung", Dr.-Ing. Karlheinz Roth, Springer-Verlag Berlin Heidelberg, 1998, ISBN 3-540-642 36-6, Kapitel 1 "Evoloid-Verzahnungen ...", Seite 2 ff.

Aus der WO2019/086068 A1 ist ein Stellantrieb für Kraftfahrzeug-Schließeinrichtungen bekannt, der über einen Elektromotor und ein vom Elektromotor über einen Antriebsstrang beaufschlagtes Stellelement verfügt. In dem Antriebsstrang ist eine Evoloidverzahnung vorgesehen. Eine Antriebswelle des Elektromotors ist mit einem Evoloidritzel ausgerüstet, welches mit einem Evoloid-Abtriebsrad unter unmittelbarer Realisierung der Evoloidverzahnung kämmt. Bevorzugt weist das Evoloidritzel drei Zähne auf. Denkbar ist jedoch nur ein einzelner Zahn. Ferner wird darauf hingewiesen, dass solche Evoloidverzahnungen in der Regel nicht selbsthemmend ausgelegt sind.

Aus Roth "Evolventen Sonderverzahnungen" und Krause "Konstruktionselemente der Feinmechanik", Seite 576 sind Zahnradgetriebe mit einem Antriebsrad mit der Zähnezahl Z = 1 bekannt, die mit einem Gegenrad kämmen. Die aus dem Stand der Technik bekannten Zahnradgetriebe mit der Zähnezahl Z = 1 sind sämtlich für Übersetzungen in das Langsame ausgelegt. Die aus dem Stand der Technik bekannten Zahnradgetriebe mit der Zähnezahl Z = 1 sind jedoch nicht einwandfrei rückdrehbar.

## Aufgabe

Ausgehend von diesem Stand der Technik liegt der Erfindung die Aufgabe zu Grunde, ein Zahnradgetriebe mit einer Übersetzung ins Langsame umfassend ein Antriebsrad mit einer Außenverzahnung mit der Zähnezahl Z = 1 zu schaffen, welches von der Abtriebsseite einwandfrei rückdrehbar ist.

## Lösung

Ein von der Abtriebsseite einwandfrei rückdrehbares Zahnradgetriebe mit einem Antriebsrad mit einer Außenverzahnung mit der Zähnezahl Z=1 und einem abtriebsseitigen Gegenrad mit einer Zähnezahl von Z $\geq$1 ergibt sich aus den Merkmalen des unabhängigen Anspruchs 1.

Der Achsabstand des Zahnradgetriebes wird im Verhältnis des Übersetzungsverhältnisses in zwei Strecken aufgeteilt. Diese Teilstrecken sind die Radien der Wälzkreise. Indem erfindungsgemäß die Zahnhöhe des Gegenrades zum Antriebsrad mit Z=1 unter den Wälzkreis des Gegenrades gelegt wird, kann das Zahnradgetriebe weitgehend unabhängig von der Größe des Eingriffswinkels gut rückdrehbar gestaltet werden.

Für die Rückdrehbarkeit sind entscheidende Kenngrößen des Zahnes des Antriebsrades der Fußhöhenfaktor $h_{fP}$ in einem Bereich von 0,2 bis 0,4, der Kopfhöhenfaktor $h_{aP}$ in einem Bereich von 0,6 bis 0,8 und der Fußradiusfaktor $_{QfP}$ in einem Bereich von 0,1 bis 0,4. Die Einhaltung des Fußradiusfaktors ist für eine leichte Rückdrehung ein wesentliches Kriterium. Die Bereichsangaben schließen jeweils die Bereichsgrenzen mit ein.

Für die Rückdrehbarkeit sind entscheidende Kenngrößen der Zähne des Gegenrades der Fußhöhenfaktor $h_{fP}$ in einem Bereich von 0,8 bis 1,2, einen Kopfhöhenfaktor $h_{aP}$ in einem Bereich von 0,1 bis 0,5 und einen Fußradiusfaktor

$$Q_{fP}$$

in einem Bereich von 0,3 bis 0,8. Die Einhaltung des Fußradiusfaktors ist für eine leichte Rückdrehung ein wesentliches Kriterium. Die Bereichsangaben schließen jeweils die Bereichsgrenzen mit ein.

Bei der Verzahnung zwischen Antriebsrad mit Z=1 und Gegenrad mit z$\geq$1 kommt zu der Profilüberdeckung $\varepsilon_{\alpha}$ infolge der Schräglage der Eingriffslinie ein Anteil aus der Sprungüberdeckung $\varepsilon_{\beta}$ über die Zahnbreite hinzu. Die Gesamtüberdeckung $\varepsilon_{\gamma}$ von Antriebs- und Gegenrad ist zwingend größer 1,3, um die leichte Rückdrehbarkeit zu gewährleisten, wobei die Gesamtüberdeckung $\varepsilon_\gamma$ die Summe aus der Profilüberdeckung $\varepsilon_\alpha$ und der Sprungüberdeckung $\varepsilon_\beta$ von Antriebs- und Gegenrad ist.

Das Antriebsrad mit Z=1 hat innen einen Innenzylinder und die Evolvente liegt außerhalb dieses Innenzylinders mit einem großen Hebelarm im Verhältnis zum Zahnkopf des Gegenrades, der eine gute Rückdrehung des Antriebsrad Z=1 vom Gegenzahnrad aus erlaubt. Der Innenzylinder ist umso größer im Durchmesser, je kleiner der Fußhöhenfaktor ist. Der Fußkreisdurchmesser liegt in der Nähe des Wälzkreises, er tangiert ungefähr den Wälzkreis.

Das Antriebsrad und das Gegenrad können Bestandteile verschiedenster Getriebebauformen sein, insbesondere eines Stirnradgetriebes, eines Innenstirnradgetriebes, eines Schraubenradgetriebes, eines Kronenradgetriebes, eines Kegelradgetriebes, eines Planetengetriebes oder eines Zahnstangengetriebes.

Sämtliche vorgenannten Getriebebauformen sind vom Antriebsrad, also dem Gegenrad mit größerer Zähnezahl, rückdrehbar.

Die Zähnezahl des Gegenrades ist $\geq 3$, vorzugsweise $\geq 8$, um eine hinreichend hohe Untersetzung in das Langsame zu gewährleisten.

Des Weiteren hat sich gezeigt, dass die erfindungsgemäßen Zahnradgetriebe besonders geräuscharm sind, da die Lastwechsel niederfrequente Geräusche erzeugen, bei denen die Hörbarkeitsschwelle deutlich höher als bei hohen Frequenzen liegt.

Nachfolgend wird die Erfindung anhand der Figuren näher erläutert:

| | |
|---|---|
| **Figur 1a)** | zeigt drei erfindungsgemäße vom Gegenrad aus rückdrehbare Zahnradgetriebe, |
| **Figur 1b)** | zeigt zwei nicht zur Erfindung gehörige selbsthemmende Zahnradgetriebe, |
| **Figur 2** | zeigt ein erfindungsgemäß ausgeführtes Zahnradgetriebe, nämlich ein Stirnradgetriebe |
| **Figur 3** | zeigt ein erfindungsgemäß ausgeführtes Zahnradgetriebe, nämlich ein Innenstirnradgetriebe, |
| **Figur 4** | zeigt ein erfindungsgemäß ausgeführtes Zahnradgetriebe, nämlich ein Schraubenradgetriebe, |
| **Figur 5** | zeigt ein erfindungsgemäß ausgeführtes Zahnradgetriebe, nämlich ein Kronenradgetriebe, |
| **Figur 6** | zeigt ein erfindungsgemäß ausgeführtes Zahnradgetriebe, nämlich ein Kegelradgetriebe, |
| **Figur 7** | zeigt ein erfindungsgemäß ausgeführtes Zahnradgetriebe, nämlich ein Planetengetriebe und |
| **Figur 8** | zeigt ein erfindungsgemäß ausgeführtes Zahnradgetriebe, nämlich ein Zahnstangengetriebe. |

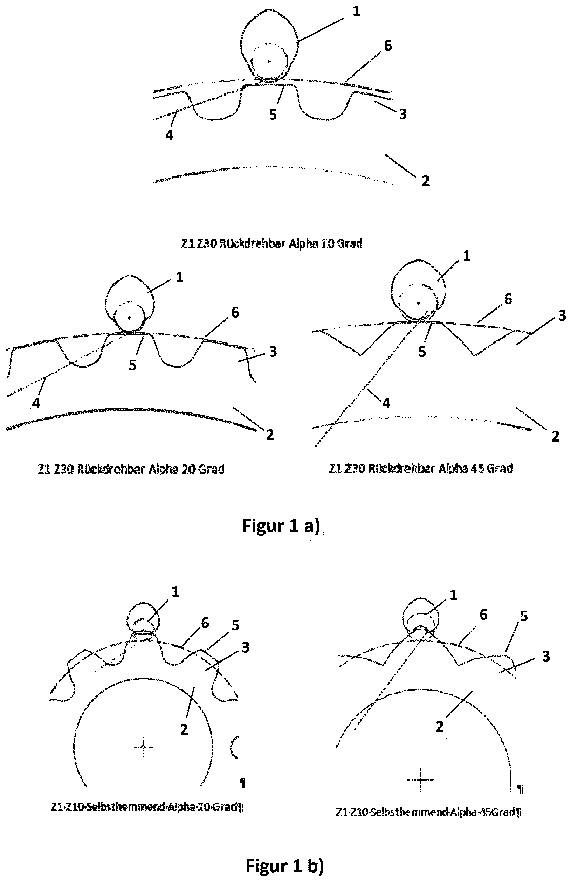

Figur 1a) zeigt drei rückdrehbare Zahnradgetriebe mit einer Übersetzung in das Langsame mit einem Antriebsrad (1) mit einer Außenverzahnung mit der Zähnezahl Z = 1. Mit dem Antriebsrad (1) kämmt ein lediglich teilweise dargestelltes Gegenrad (2) mit 30 Zähnen (3). Die Verzahnungsparameter von Antriebsrad (1) und Gegenrad (2) der drei Zahnradgetriebe I liegen in den im Anspruch 1 definierten Bereichen. Die Gesamtüberdeckung $\varepsilon_\gamma$ von Antriebs- und Gegenrad ist größer 1,3.

Unterschiede zwischen den drei dargestellten Zahnradgetrieben ergeben sich hinsichtlich des Eingriffswinkels $\alpha$ von 10°, 20° und 45°, der dem Winkel zwischen der Verbindungsnormalen der beiden Zahnradachsen und der Eingriffslinie (4) entspricht. Aus Figur 1a) ist erkennbar, dass bei allen Zahnradgetrieben die Zahnhöhe (5) der Zähne (3) des Gegenrades (2) unterhalb von dessen gestrichelt dargestellten Wälzkreis (6) liegt.

Figur 1b) zeigt zwei, nicht zur Erfindung gehörige selbsthemmende Zahnradgetriebe mit einer Übersetzung in das Langsame mit einem Antriebsrad (1) mit einer Außenverzahnung mit der Zähnezahl Z = 1. Mit dem Antriebsrad (1) kämmt ein lediglich teilweise dargestelltes Gegenrad (2) mit 10 Zähnen (3). Die Verzahnungsparameter von Antriebsrad (1) und Gegenrad (2) der drei Zahnradgetriebe I liegen in den im Anspruch 4 definierten Bereichen.

Die Gesamtüberdeckung $\varepsilon_\gamma$ von Antriebs- und Gegenrad (1), (2) ist größer als 1,0 und kleiner oder gleich 1,1, wobei die Gesamtüberdeckung $\varepsilon_\gamma$ die Summe aus der Profilüberdeckung $\varepsilon_\alpha$ und der Sprungüberdeckung $\varepsilon_\beta$ von Antriebs- und Gegenrad ist und die Profilüberdeckung $\varepsilon_\alpha$ größer oder gleich 0,4 ist.

Unterschiede zwischen den beiden dargestellten, selbsthemmenden Zahnradgetrieben ergeben sich hinsichtlich des Eingriffswinkels $\alpha$ von 10° und 45°, der dem Winkel zwischen der Verbindungsnormalen der beiden Zahnradachsen und der Eingriffslinie (4) entspricht. Aus Figur 1b) ist erkennbar, dass bei beiden Zahnradgetrieben die Zahnhöhe (5) der Zähne (3) des Gegenrades (2) oberhalb von dessen gestrichelt dargestellten Wälzkreis (6) liegt.

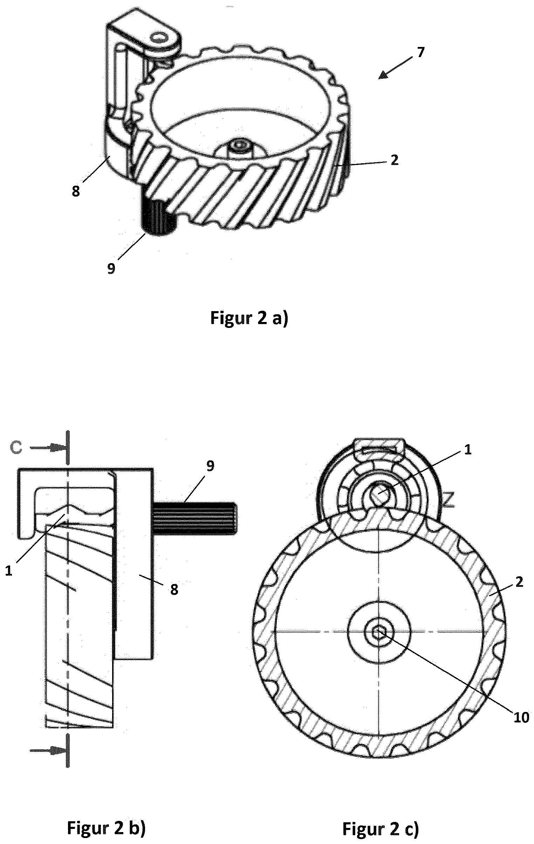

Figur 2 zeigt in einer perspektivischen Ansicht a), in einer Seitenansicht b) und in einer Schnittdarstellung c) entlang der Linie C-C ein erfindungsgemäß ausgeführtes, einstufiges Stirnradgetriebe (7). In einem Gehäuse (8) sitzt auf einer ersten Welle (9) antriebsseitig das Antriebsrad (1) mit Z=1.

In dem Gehäuse (8) sitzt auf einer zweiten, zur ersten Welle (9) parallelen Welle (10) das außen schrägverzahnte Gegenrad (2) mit Z=20.

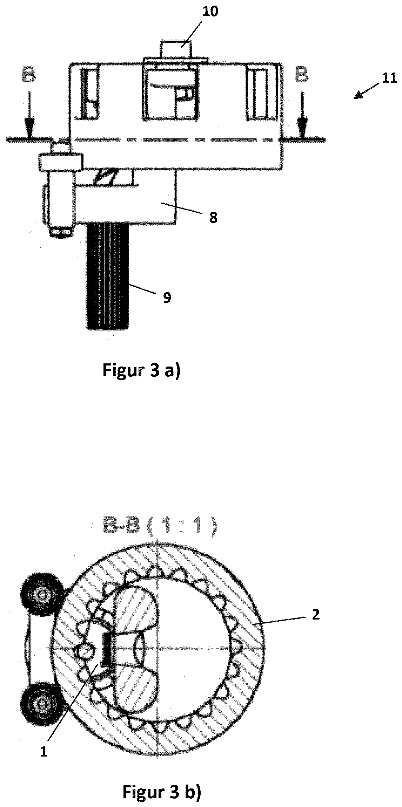

Figur 3 zeigt in einer Seitenansicht a) und in einer Schnittdarstellung b) entlang der Linie B-B nach Figur 3 a) ein erfindungsgemäß ausgeführtes, einstufiges Innenstirnradgetriebe (11). In einem Gehäuse (8) sitzt auf einer ersten Welle (9) antriebsseitig das Antriebsrad (1) mit Z=1. In dem Gehäuse (8) ist um eine zur ersten Welle (9) parallele zweite Welle (10) das innen, schrägverzahnte Gegenrad (2) mit Z=20 drehbar angeordnet.

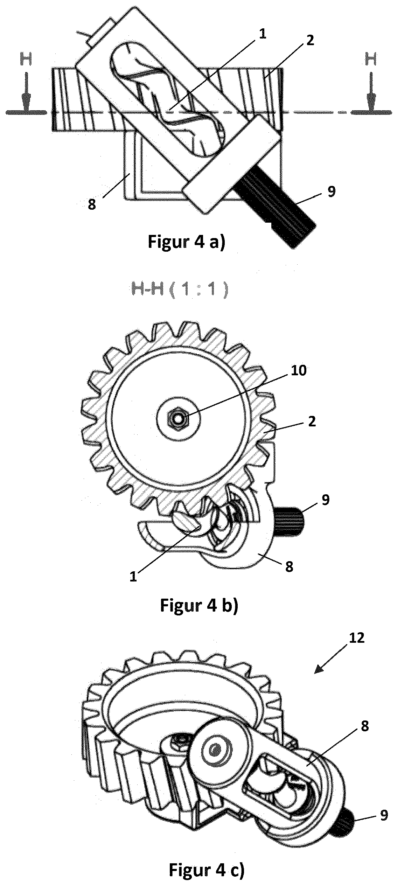

Figur 4 zeigt in einer Aufsicht a), einer Schnittdarstellung b) entlang der Linie H-H nach Figur 4 a) und einer perspektivischen Ansicht c) ein erfindungsgemäß ausgeführtes, Schraubenradgetriebe (12). In einem Gehäuse (8) sitzt auf einer ersten Welle (9) antriebsseitig das Antriebsrad (1) mit Z=1. In dem Gehäuse (8) sitzt auf einer zweiten, zur ersten Welle (9) windschiefen Welle (10) das außen schrägverzahnte Gegenrad (2) mit Z=20.

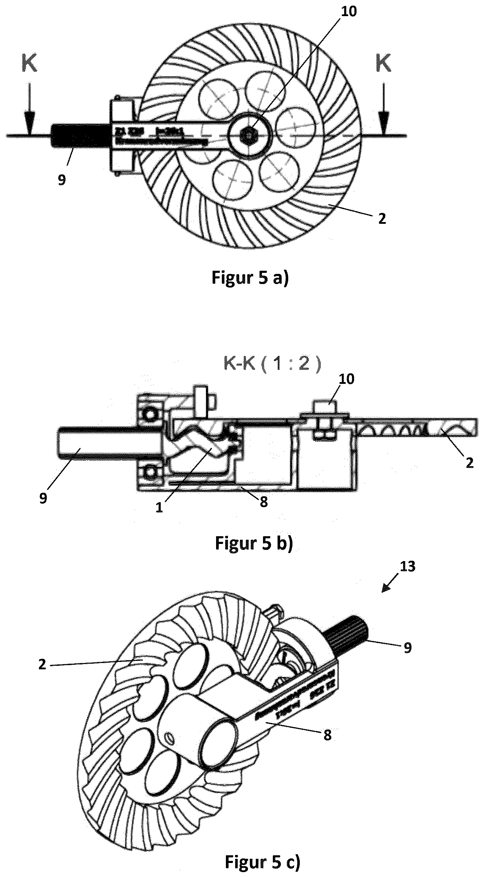

Figur 5 zeigt in einer Aufsicht a), einer Schnittdarstellung b) entlang der Linie K-K nach Figur 5 a) und einer perspektivischen Ansicht c) ein erfindungsgemäß ausgeführtes, Kronenradgetriebe (13). Das Kronenradgetriebe (13) ist ein Winkelgetriebe. In einem Gehäuse (8) sitzt auf einer ersten Welle (9) antriebsseitig das Antriebsrad (1) mit Z=1. In dem Gehäuse (8) sitzt auf einer zweiten, zur ersten Welle (9) rechtwinklig verlaufenden Welle (10) das als Kronenrad ausgeführte Gegenrad (2). Der Winkel und Versatz zwischen der ersten und zweiten Welle (9,10) kann bei der Ausführung als Kronenradgetriebe variieren, so dass sich die Wellen schneiden oder kreuzen.

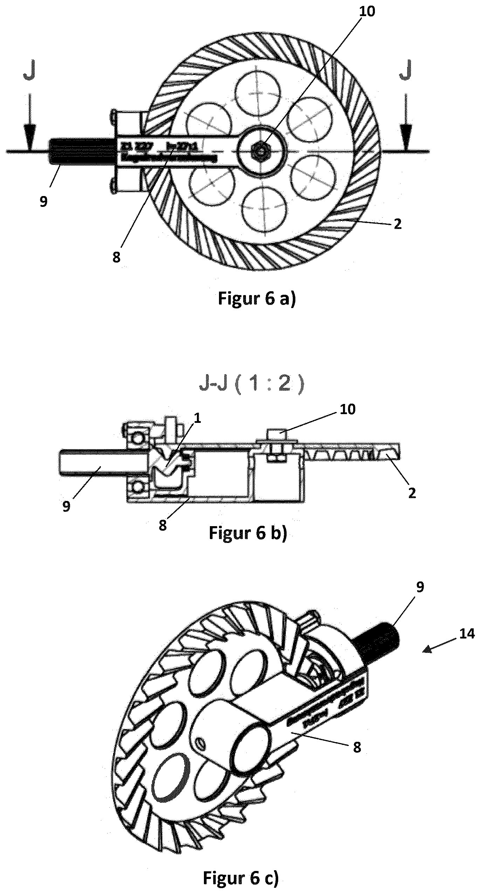

Figur 6 zeigt in einer Aufsicht a), einer Schnittdarstellung b) entlang der Linie J-J nach Figur 6 a) und einer perspektivischen Ansicht c) ein erfindungsgemäß ausgeführtes Kegelradgetriebe (14). Das Kegelradgetriebe (14) ist ein Winkelgetriebe, dessen winklig zueinander stehenden An- und Abtriebswellen einen gemeinsamen Schnittpunkt besitzen. In einem Gehäuse (8) sitzt auf einer ersten Welle (9) antriebsseitig das Antriebsrad (1) mit Z=1. In dem Gehäuse (8) sitzt auf einer zweiten, zur ersten Welle (9) rechtwinklig verlaufenden Welle (10) das als schrägverzahntes Kegelrad ausgeführte Gegenrad (2). Andere Winkel zwischen den Wellen (9,10) sind möglich.

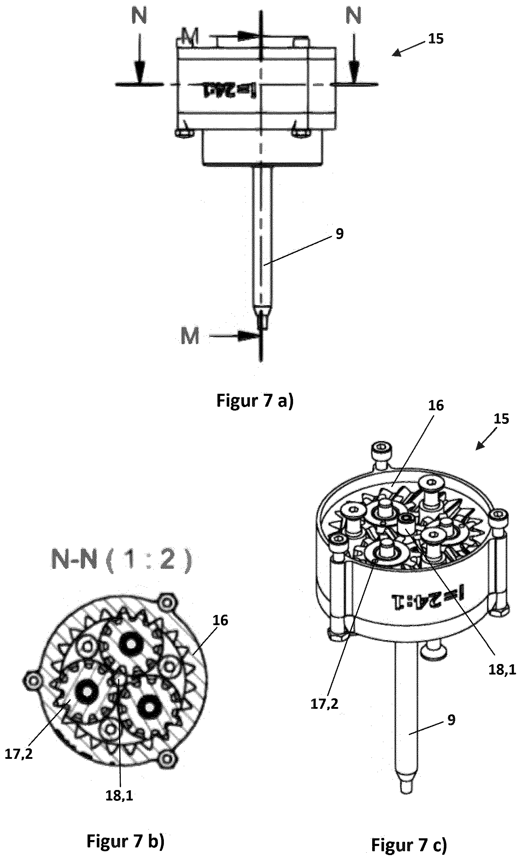

Figur 7 zeigt in einer Seitensicht a), einer Schnittdarstellung b) entlang der Linie N-N nach Figur 7 a) und einer perspektivischen Ansicht c) ein erfindungsgemäß ausgeführtes Planetengetriebe (15). Das Planetengetriebe (15) weist ein gestellfestes Hohlrad (16), drei an einem Steg drehbar gelagerte, umlaufende als Planetenräder (17) ausgebildete Gegenräder (2) und ein zentrales, als Sonnenrad (18) ausgebildetes Antriebsrad (1) mit Z=1 auf. Das Antriebsrad (1) sitzt auf einer ersten Welle (9). Der Abtrieb des Planetengetriebes erfolgt über den die Gegenräder (2) tragenden Steg.

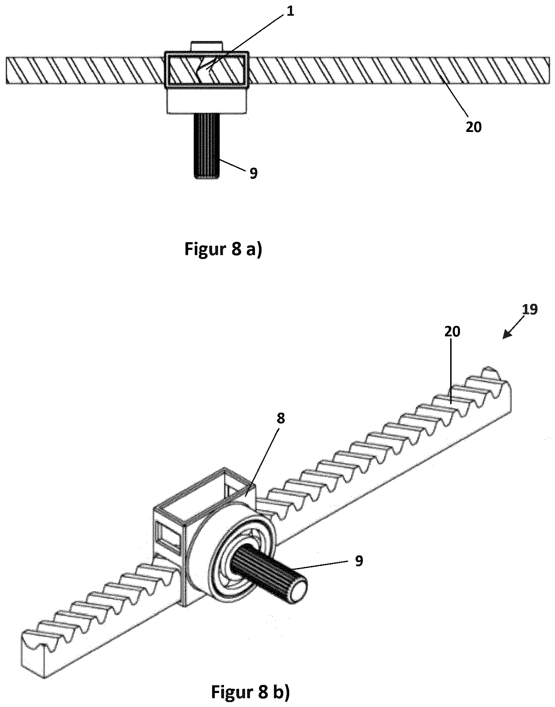

Figur 8 zeigt in einer Aufsicht a) und einer perspektivischen Ansicht b) ein erfindungsgemäß ausgeführtes Zahnstangengetriebe (19). Der Zahnstangenantrieb (19) weist eine in einem Gehäuse (8) translatorische geführte, schrägverzahnte Zahnstange (20) und ein mit der Zahnstange (20) kämmendes Antriebsrad (1) mit Z=1 auf. Die erste Welle (9), auf der das Antriebsrad (1) mit Z=1 sitzt, ist in dem Gehäuse (8) drehbar gelagert und verläuft rechtwinklig zur Verschieberichtung der Zahnstange (20). Die Geometrie der Zahnstange entspricht der abgewickelten Geometrie eines Zahnrades. Aus diesem Grund wird ein Zahnstangengetriebe ebenfalls als Zahnradgetriebe im Sinne der Erfindung angesehen.

Sämtliche anhand der Figuren 2-8 näher erläuterten Zahnradgetriebe sind mit Verzahnungsparametern entsprechend dem unabhängigen Anspruch 1 ausgeführt, um ein von der Abtriebsseite rückdrehbares Zahnradgetriebe zu realisieren.

## Bezugszeichenliste

1 Antriebsrad
2 Gegenrad
3 Zahn
4 Eingriffslinie
5 Zahnhöhe
6 Wälzkreis
7 Stirnradgetriebe
8 Gehäuse
9 erste Welle
10 zweite Welle
11 Innenstirnradgetriebe
12 Schraubenradgetriebe
13 Kronenradgetriebe
14 Kegelradgetriebe
15 Planetengetriebe
16 Hohlrad
17 Planetenrad
18 Sonnenrad
19 Zahnstangengetriebe
20 Zahnstange

## Patentansprüche

1. Zahnradgetriebe mit einer Übersetzung ins Langsame umfassend

   - ein Antriebsrad (1) mit einer Außenverzahnung mit der Zähnezahl Z = 1, wobei der Zahn des Antriebsrades (1) einen

     - Fußhöhenfaktor $h_{fP}$ in einem Bereich von 0,2 bis 0,4,
     - einen Kopfhöhenfaktor $h_{aP}$ in einem Bereich von 0,6 bis 0,8 und
     - einen Fußradiusfaktor $_{QfP}$ in einem Bereich von 0,1 bis 0,4 aufweist,

   - ein mit dem Antriebsrad (1) kämmendes Gegenrad (2) mit einer Zähnezahl von Z≥1, wobei die Zahnhöhe (5) der Zähne (3) des Gegenrades (2) unterhalb von dessen Wälzkreis (6) liegt und die Zähne (3) des Gegenrades (2) einem

     - Fußhöhenfaktor $h_{fP}$ in einem Bereich von 0,8 bis 1,2,
- einen Kopfhöhenfaktor $h_{aP}$ in einem Bereich von 0,1 bis 0,5 und
- einen Fußradiusfaktor $_{QfP}$ in einem Bereich von 0,3 bis 0,8 aufweisen,

- eine Gesamtüberdeckung $\varepsilon_\gamma$ von Antriebs- und Gegenrad (1, 2) größer 1, 3.

**2.** Zahnradgetriebe mit einer Übersetzung ins Langsame nach Anspruch 1, **dadurch gekennzeichnet, dass** die Gesamtüberdeckung $\varepsilon_\gamma$ die Summe aus der Profilüberdeckung $\varepsilon_\alpha$ und der Sprungüberdeckung $\varepsilon_\beta$ von Antriebs- und Gegenrad (1, 2) ist.

**3.** Zahnradgetriebe nach Anspruch 1 oder 2, **dadurch gekennzeichnet, dass** das Antriebsrad (1) und das Gegenrad (2) Bestandteile eines Stirnradgetriebes (7) oder eines Innenstirnradgetriebes (11) oder eines Schraubenradgetriebes (12) oder eines Kronenradgetriebes (13) oder eines Kegelradgetriebes (14) oder eines Planetengetriebes (15) oder eines Zahnstangengetriebes (19) sind.

**4.** Zahnradgetriebe nach einem der Ansprüche 1 bis 3, **dadurch gekennzeichnet, dass** die Zähnezahl des Gegenrades $\geq 3$, vorzugsweise $\geq 8$ ist.

## Claims

**1.** A gear transmission with a speed-reducing ratio comprising

- a drive wheel (1) having an external toothing with the tooth number Z = 1, wherein the tooth of the drive wheel (1) has a

- foot height factor $h_{fP}$ in a range from 0.2 to 0.4,
- a head height factor $h_{aP}$ in a range from 0.6 to 0.8 and
- a foot radius factor $Q_{fP}$ in a range from 0.1 to 0.4,

- a counter wheel (2) engaging with the drive wheel (1) having a tooth number Z $\geq$ 1, where the tooth height (5) of the teeth (3) of the counter wheel (2) lies below its pitch circle (6) and the teeth (3) of the counter wheel (2) have a

- foot height factor $h_{fP}$ in a range from 0.8 to 1.2,
- a head height factor $h_{aP}$ in a range from 0.1 to 0.5 and
- a foot radius factor $Q_{fP}$ in a range from 0.3 to 0.8,

- a total contact ratio $\varepsilon_\gamma$ of drive and counter wheel (1, 2) greater than 1.3.

**2.** The gear transmission with a speed-reducing ratio according to Claim 1, **characterized in that** the total contact ratio $\varepsilon_\gamma$ is the sum of the transverse contact $\varepsilon_\alpha$ and the overlap ratio $\varepsilon_\beta$ of drive and counter wheel (1, 2).

**3.** The gear transmission according to Claim 1 or 2, **characterized in that** the drive wheel (1) and the counter wheel (2) are parts of a spur gear (7) or an internal spur gear (11) or a worm wheel gear (12) or a crown gearhead (13) or a bevel gear (14) or a planetary gear (15) or a rack and pinion gear (19).

**4.** The gear transmission according to one of Claims 1 to 3, **characterized in that** the tooth number of the counter wheel is $\geq 3$, preferably $\geq 8$.

## Revendications

**1.** Transmission par engrenage, avec un réducteur de vitesse comprenant

- une roue d'entraînement (1), dotée d'une denture extérieure avec le nombre de dents Z = 1, la dent de la roue d'entraînement (1) présentant

- un coefficient de hauteur de pied $h_{fP}$ dans un ordre de 0,2 à 0,4,
- un coefficient de hauteur de tête $h_{aP}$ dans un ordre de 0,6 à 0,8 et
- un coefficient de rayon de pied $Q_{fP}$ dans un ordre de 0,1 à 0,4,

- une roue conjuguée (2) qui s'engrène dans la roue d'entraînement (1), dotée d'un nombre de dents de Z $\geq$ 1, la hauteur de dent (5) des dents (3) de la roue conjuguée (2) étant inférieure à son cercle primitif (6) et les dents (3) de la roue conjuguée (2) présentant

- un coefficient de hauteur de pied $h_{fP}$ dans un ordre de 0,8 à 1,2,
- un coefficient de hauteur de tête $h_{aP}$ dans un ordre de 0,1 à 0,5 et
- un coefficient de rayon de pied $Q_{fP}$ dans un ordre de 0,3 à 0,8,

- un recouvrement total $\varepsilon_\gamma$ de la roue d'entraînement et de la roue conjuguée (1, 2) supérieur à 1,3.

**2.** Transmission par engrenage, avec un réducteur de vitesse selon la revendication 1, **caractérisée en ce que** le rapport de recouvrement total $\varepsilon_\gamma$ est la somme

du rapport de profil $\varepsilon_\alpha$ et du rapport de recouvrement $\varepsilon_\beta$ de la roue d'entraînement et de la roue conjuguée (1, 2).

3. Transmission par engrenage selon la revendication 1 ou 2, **caractérisée en ce que** la roue d'entraînement (1) et la roue conjuguée (2) sont des éléments d'un engrenage droit (7) ou d'un engrenage droit interne (11) ou d'un engrenage à roues-hélices (12) ou d'un engrenage à couronne dentée (13) ou d'un engrenage conique (14) ou d'un engrenage planétaire (15) ou d'un engrenage à crémaillère (19).

4. Transmission par engrenage selon l'une quelconque des revendications 1 à 3, **caractérisée en ce que** le nombre de dents de la roue conjuguée est $\geq 3$, de préférence $\geq 8$.

Z1 Z30 Rückdrehbar Alpha 10 Grad

Z1 Z30 Rückdrehbar Alpha 20 Grad

Z1 Z30 Rückdrehbar Alpha 45 Grad

**Figur 1 a)**

Z1-Z10-Selbsthemmend-Alpha-20-Grad

Z1-Z10-Selbsthemmend-Alpha-45Grad

**Figur 1 b)**

**Figur 2 a)**

**Figur 2 b)**          **Figur 2 c)**

**Figur 3 a)**

**B-B ( 1 : 1 )**

**Figur 3 b)**

**Figur 4 a)**

H-H ( 1 : 1 )

**Figur 4 b)**

**Figur 4 c)**

EP 3 789 636 B1

K       K

**Figur 5 a)**

K-K ( 1 : 2 )

**Figur 5 b)**

**Figur 5 c)**

11

**Figur 6 a)**

J-J ( 1 : 2 )

**Figur 6 b)**

**Figur 6 c)**

**Figur 7 a)**

**N-N ( 1 : 2 )**

**Figur 7 b)**

**Figur 7 c)**

**Figur 8 a)**

**Figur 8 b)**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202011106149 U1

- WO 2019086068 A1

**In der Beschreibung aufgeführte Nicht-Patentliteratur**

- Zahnradtechnik, Evolventen-Sonderverzahnungen zur Getriebeverbesserung. **DR.-ING. KARLHEINZ ROTH.** Evoloid-Verzahnungen ... Springer-Verlag, 1998, 2